# EUROPEAN PATENT SPECIFICATION

(11) **EP 4 385 352 B1**
(45) Date of publication and mention of the grant of the patent: **27.05.2026**
(21) Application number: 23214861.9
(22) Date of filing: 07.12.2023
(51) Int. Cl.: A43B 13/12, B29D 35/14

(54) **METHOD FOR PRODUCING A SOLE STRUCTURE FOR A SHOE**
VERFAHREN ZUR HERSTELLUNG EINER SOHLENSTRUKTUR FÜR EINEN SCHUH
PROCÉDÉ DE FABRICATION D'UNE STRUCTURE DE SEMELLE POUR UNE CHAUSSURE

(30) Priority: 14.12.2022 US 202263432530 P
(43) Date of publication of application: 19.06.2024
(73) Proprietor: PUMA SE, 91074 Herzogenaurach (DE)
(72) Inventor: BONIN, Mauro, 90419 Nürnberg (DE); TSAI, Hsiu Lan, Taichung City (TW); LO, Yun Shen, Taichung City (TW)
(74) Representative: Gosdin, Carstensen & Partner Patentanwälte Partnerschaftgesellschaft mbB

(56) References cited:
- EP-A1- 2 786 670
- US-A1- 2012 196 115
- US-A1- 2015 208 754
- US-A1- 2019 150 557
- US-A1- 2019 150 558
- US-A1- 2022 227 086

## Description

### BACKGROUND

### Field of the Disclosure

The present disclosure relates generally to a sole structure for an article of footwear, as well as methods of manufacturing the same. More specifically, the methods described herein can allow for manufacturing of multiple components, e.g., a plate, a midsole, and/or an outsole, via a single step process in which one or more materials used to form the components is injected together into a single mold to form the sole structure. Such methods can reduce manufacturing time, cost, and number of defective articles of footwear. Such methods may also reduce the need for traditional coupling methods between the midsole, outsole, and plate, via methods such as adhesives, stitching, overmolding, etc.

### Description of the Background

Generally, an article of footwear includes an upper defining an interior space configured to receive a foot of a user. A sole structure is typically attached to a lower surface or boundary of the upper and is positioned between the upper and a support surface, e.g., the ground. As a result, the sole typically provides stability and cushioning to the user when the shoe is being worn. **In** some instances, the sole may include multiple components, such as an outsole, a midsole, a plate, and an insole. The outsole may provide traction to a bottom surface of the sole, and the midsole may be attached to an inner surface of the outsole and may provide cushioning or added stability to the sole. The plate may be disposed within or between any of the midsole, outsole, or insole. The plate may provide extra support and protection, while increasing the amount of energy returned to the wearer during physical activity.

However, with conventional manufacturing techniques, each component of a sole structure must generally be formed as separate elements that must be later bonded, *e.g.,* glued or otherwise connected, with one another to form a sole structure. For example, a midsole and outsole can be formed as separate components that are secured to one another via an adhesive, or a midsole can be formed at a first molding step using a first mold and then an outsole can be formed on the midsole at a second molding step using a second mold. As a result, conventional construction methods can require numerous machines to form the various parts of the sole structure, which leads to increased costs, complexity, and cycle time. Further, elements that are glued together may not move independently from one another, restricting possible advantageous properties of each additional sole element. Furthermore, to ensure proper adhesion, a glue or adhesive can typically only be used in conjunction with specific materials, thereby limiting the composition of the elements included in the sole structure.

US 2022/0227086 A1 discloses an injection molding method in which a first mold and a second mold are used; during the injection molding process, the second mold is replaced by a third mold. Another production process using injection molding is disclosed in US 2012/0196115 A1. Similar solutions are disclosed in US 2015/208754 A1, in US 2019/150557 A1 and in US 2019/150558 A1.

### SUMMARY

The scope of protection of the method according to the present invention is defined by the attached patent claims. A number of advantages of the articles of footwear described herein will be apparent to those having ordinary skill in the art.

According to one aspect of the disclosure, a method of manufacturing a sole structure can include melting a first material in a first plasticization zone of a first injection line and melting a second material in a second plasticization zone of a second injection line. A first blowing agent can be injected into the first material within a first mixing zone of the first injection line. The first blowing agent can be a supercritical fluid within the first mixing zone. The first material and the second material can be co-injected into a mold to form the sole structure. The first material can be injected from a first injection chamber that is separated from the first mixing zone by a first orifice and the second material can be injected from a second injection chamber. The first blowing agent can nucleate within the mold to expand and foam the first material within the mold.

In some non-limiting examples, the method can further include injecting a second blowing agent into the second material within a second mixing zone of the second injection line. The second blowing agent can nucleate within the mold to expand and foam the second material within the mold. The first plasticization zone can be separated from the first mixing zone by a second orifice and the second plasticization zone can be separated from the second mixing zone by a third orifice. The first mixing zone can be separated from the first injection chamber by a first orifice and the second mixing zone can be separated from the second injection chamber by a fourth orifice.

In some non-limiting examples, the method can further include placing a preformed component into the mold. At least one of the first injection chamber and the second injection chamber can include a plurality of injection chambers. A pressure gradient can exist between the mold and each of the first injection chamber and the second injection chamber, such that the mold can be a lower pressure than each of the first injection chamber and the second injection chamber. The first material can form a midsole of the sole structure and the second material can form an outsole of the sole structure. The first blowing agent can be at least one of nitrogen and carbon dioxide.

According to another aspect of the disclosure, an injection line for a molding machine can include a first zone, a second zone, and a third zone. The first zone can be configured to receive a solidified material and to melt the solidified material to form a melt. The second zone can be configured to receive the melt and a blowing agent that can be a supercritical fluid within the second zone. The melt and the blowing agent can mix together to form a single-phase solution within the second zone. The third zone can be configured to receive the single-phase solution from the second zone and to inject the single-phase solution into a mold. The first zone, the second zone, and the third zone can be isolated from one another so that mixing of the blowing agent in the second zone does not affect melting in the first zone, and injection of the single-phase solution does not affect mixing in the second zone.

In some non-limiting examples, the melt can be delivered to the third zone using at least one of a line-up injection system and a rotary injection system.

In some non-limiting examples, the injection line can further include an orifice plate that can be configured to isolate the second zone from the first zone, such that the blowing agent can be prevented from dissolving into the first zone. The injection line may further include an orifice that can be configured to isolate the third zone from the second zone, such that the single-phase solution can be prevented from flowing into the second zone when the third zone injects the single-phase solution. In some cases, the second zone can be at a temperature and pressure configured to maintain the blowing agent in a supercritical fluid state.

According to yet another aspect of the disclosure, a molding machine can include a mold defining a mold cavity, a first injection line configured to supply a first material to the mold cavity, and a second injection line configured to supply a second material to the mold cavity. Each of the first injection line and the second injection line can include a plasticization zone, a mixing zone, and an injection chamber. A gas delivery system can be configured to supply a supercritical fluid to the mixing zone of at least one of the first injection line and the second injection line, and the mixing zone can be configured to dissolve the supercritical fluid into a least one of the first material and the second material to form a corresponding single-phase solution.

In some non-limiting examples, each of the first injection line and the second injection line can include an orifice plate between the plasticization zone and the mixing zone. The orifice plate can be configured to prevent the supercritical fluid from dissolving into the plasticization zone. In some cases, each of the first injection line and the second injection line can include an orifice between the mixing zone and the injection chamber. The orifice can be configured prevent the single-phase solution from flowing into the mixing zone when the injection chamber injects the single-phase solution into the mold cavity.

In some non-limiting examples, the mold cavity can be at a lower pressure than the injection chamber so that the supercritical fluid nucleates within the mold cavity to cause foaming of at least one of the first material and the second material. In some cases, the mold can be configured to receive a preformed component and at least one of the first material and the second material can foam around the preformed component.

In still another example, an article of footwear can include an upper that is coupled with a sole structure. The sole structure can include a first component made of a first material and a second component made of a second material. The first material and the second material can be co-injected into a mold to form the sole structure. The first material can be injected into the mold via a first injection line that can including a first plasticization zone configured to melt the first material to form a first melt, a first mixing zone configured to mix the first melt with a blowing agent to form a first single-phase solution, and a first injecting zone configured to receive the first single-phase solution and inject the first single-phase solution into the mold. The blowing agent can be a supercritical fluid within the first mixing zone. The first plasticization zone, the first mixing zone, and the first injection zone may be isolated from one another. The second material may be injected into the mold via a second injection line.

Other aspects of the articles of footwear described herein, including features and advantages thereof, will become apparent to one of ordinary skill in the art upon examination of the figures and detailed description herein. Therefore, all such aspects of the articles of footwear are intended to be included in the detailed description and this summary.

### BRIEF DESCRIPTION OF THE DRAWINGS

FIG. 1 is a lateral view of a sole structure for an article of footwear according to aspects of the disclosure;
FIG. 2 is a medial view of the sole structure of FIG. 1;
FIG. 3 is a bottom plan view of the sole structure of FIG. 1;
FIG. 4 is a top plan view of the sole structure of FIG. 1;
FIG. 5 is a cross-sectional view of the sole structure taken along line V-V in FIG. 3;
FIG. 6 is a bottom plan view of a midsole of the sole structure of FIG. 1;
FIG. 7 is a top plan view of the midsole of FIG. 6;
FIG. 8 is a rear view of the midsole of FIG. 6;
FIG. 9 is a top schematic view of the sole structure of FIG. 1;
FIG. 10 is a cross-sectional view of the sole structure taken along line X-X in FIG. 9.
FIG. 11 is a cross-sectional view of the sole structure taken along line XI-XI in FIG. 9.
FIG. 12 is a cross-sectional view of the sole structure taken along line XII-XII in FIG. 9.
FIG. 13 is a cross-sectional view of the sole structure taken along line XIII-XIII in FIG. 9.
FIG. 14 is a front view of the sole structure of FIG. 1.
FIG. 15 is a top view of a plate of the sole structure of FIG. 1;
FIG. 16 is a bottom view of the plate of FIG. 15;
FIG. 17 is a bottom perspective view of an outsole of the sole structure of FIG. 1;
FIG. 18 is a top perspective view of the outsole of FIG. 17;
FIG. 19 is a cross-sectional view of the sole structure taken along line XIX-XIX in FIG. 9;
FIG. 20 is a partial perspective view of a sole structure according to aspects of the disclosure;
FIG. 21 is a flowchart of a method of manufacturing a sole structure;
FIG. 22 is a schematic illustration of an injection line used to inject a material of a sole structure in accordance with the method of FIG. 21.
FIG. 23 is a schematic view of a mold plate according to aspects of the disclosure, which can be used to manufacture a sole structure in accordance with the method of FIG. 21;
FIG. 24 is a cross sectional view of the mold plate taken along line XXIV-XXIV in FIG. 23;
FIG. 25 a side of the mold plate of FIG 23;
FIG. 26 is a lateral side view of another article of footwear according to aspects of the disclosure; and
FIG. 27 is a bottom and lateral side perspective view of the article of footwear of FIG. 26.

### DETAILED DESCRIPTION

The following discussion and accompanying figures disclose various embodiments or configurations of a shoe. Although embodiments are disclosed with reference to a sports shoe, such as a running shoe, tennis shoe, basketball shoe, etc., concepts associated with embodiments of the shoe may be applied to a wide range of footwear and footwear styles, including basketball shoes, cross-training shoes, football shoes, golf shoes, hiking shoes, hiking boots, ski and snowboard boots, soccer shoes and cleats, walking shoes, and track cleats, for example. Concepts of the shoe may also be applied to articles of footwear that are considered non-athletic, including dress shoes, sandals, loafers, slippers, and heels. In addition to footwear, particular concepts described herein may also be applied and incorporated in other types of articles, including apparel or other athletic equipment, such as helmets, padding or protective pads, shin guards, and gloves. Even further, particular concepts described herein may be incorporated in cushions, backpacks, suitcases, backpack straps, golf clubs, or other consumer or industrial products. Accordingly, concepts described herein may be utilized in a variety of products.

The term "about," as used herein, refers to variation in the numerical quantity that may occur, for example, through typical measuring and manufacturing procedures used for articles of footwear or other articles of manufacture that may include embodiments of the disclosure herein; through inadvertent error in these procedures; through differences in the manufacture, source, or purity of the ingredients used to make the compositions or mixtures or carry out the methods; and the like. Throughout the disclosure, the terms "near," "about," and "approximately" refer to a range of values ± 5% of the numeric value that the term precedes.

Further, as used herein, unless otherwise defined or limited, directional terms are used for convenience of reference for discussion of particular figures or examples. For example, references to "downward," or other directions, or "lower" or other positions, may be used to discuss aspects of a particular example or figure, but do not necessarily require similar orientation or geometry in all installations or configurations.

The terms first, second, third, etc., may be used herein to describe various elements, components, regions, layers and/or sections. These elements, components, regions, layers and/or sections should not be limited by these terms. These terms may be only used to distinguish one element, component, region, layer, or section from another region, layer, or section. Terms such as "first," "second," and other numerical terms do not imply a sequence or order unless clearly indicated by the context. Thus, a first element, component, region, layer, or section discussed below could be termed a second element, component, region, layer, or section without departing from the teachings of the example configurations.

The present disclosure is directed to an article of footwear or specific components of the article of footwear, such as an upper or a sole or sole structure, and methods for making the same. The upper may comprise a knitted component, a woven textile, a non-woven textile, leather, mesh, suede, or a combination of one or more of the aforementioned materials. The knitted component may be made by knitting of yarn, the woven textile by weaving of yarn, and the non-woven textile by manufacture of a unitary non-woven web. Knitted textiles include textiles formed by way of warp knitting, weft knitting, flat knitting, circular knitting, or other suitable knitting operations. The knit textile may have a plain knit structure, a mesh knit structure, or a rib knit structure, for example. Woven textiles include, but are not limited to, textiles formed by way of any of the numerous weave forms, such as plain weave, twill weave, satin weave, dobbin weave, jacquard weave, double weaves, or double cloth weaves, for example. Non-woven textiles include textiles made by air-laid or spun-laid methods, for example. The upper may comprise a variety of materials, such as a first yarn, a second yarn, or a third yarn, which may have varying properties or varying visual characteristics.

**In** some embodiments, the upper may comprise an inner layer and an outer layer, which may provide a mixture of stretch and stability. The inner layer and the outer layer may be attached to one another by stitching, an adhesive, welding, or other connection methods as are known in the art. The inner layer may be made of material that allows the upper to stretch in multiple directions, for example, a 4-way stretch material, so that the upper is both snug and comfortable, and can conform to the foot of a user. **In** addition to providing the upper with a layer that is flexible and can better conform to a foot of a user, the inner layer may provide for a more comfortable upper that reduces friction or other rubbing between the foot of a user and the upper. The outer layer is made from a resilient woven material, which may resist stretching.

In some cases, the upper may further include a heel cup coupled to and substantially surrounding the heel of a user. The heel cup is a rigid or semi-rigid structure that may provide additional support for the foot of a user. The heel cup may be made of a plastic, for example, TPU, or a composite material. In some cases, the heel cup is transparent or translucent.

In addition, the present disclosure relates to an article of footwear having a sole structure attached to the upper. The sole structure includes a midsole that may be attached to the upper, an outsole attached below the midsole and defining a bottom of the article of footwear, and a number of sole elements. In some embodiments, the midsole and the outsole may be a unitary body made from, for example, one or more foam or rubber materials, which can cushion the user's foot as it impacts the ground and gives the user traction. For example, a midsole may be a foamed thermoplastic element that provides cushioning for a user. As a few particular examples, the midsole may be made from one or more thermoplastic materials, such as thermoplastic polyurethane, ethylenevinyl acetate, nylon, nylon polyamide, thermoplastic elastomer, thermoplastic polyamide, etc. In some cases, a midsole can include other types of materials, including non-thermoplastic materials. Correspondingly, the midsole can be a multi-density midsole with two or more layers having different densities to provide tuned cushioning characteristics. Additionally, an outsole may be a rubber material to increase traction and durability. An outsole may be formed from one or more outsole sections, which may or may not be continuous with one another.

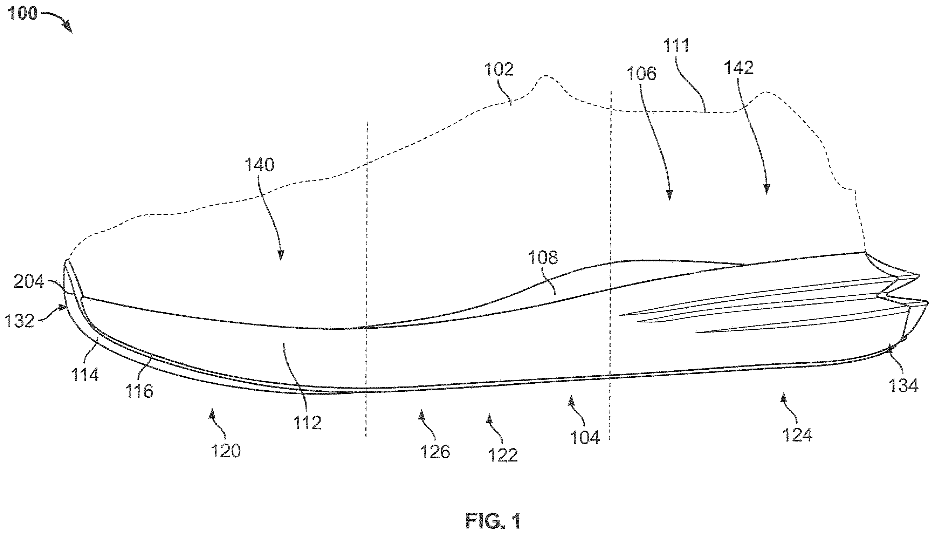

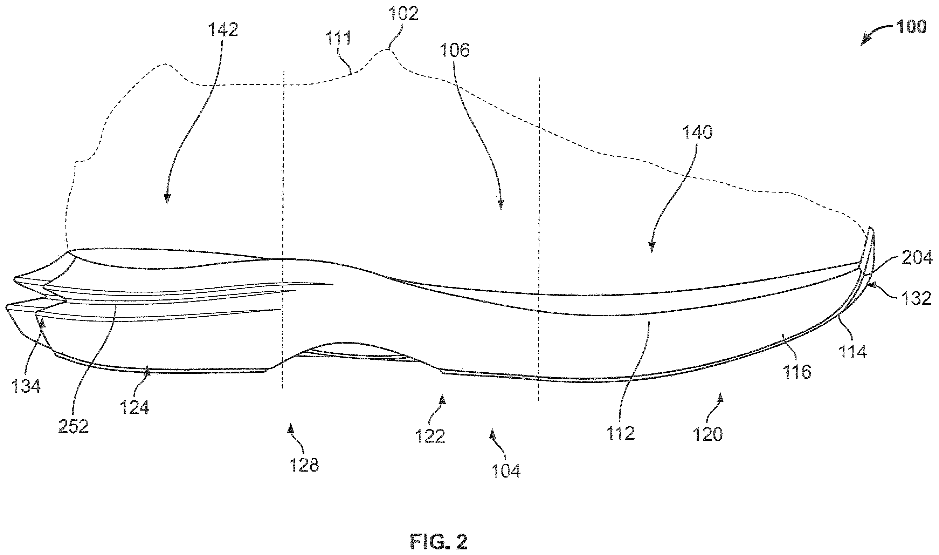

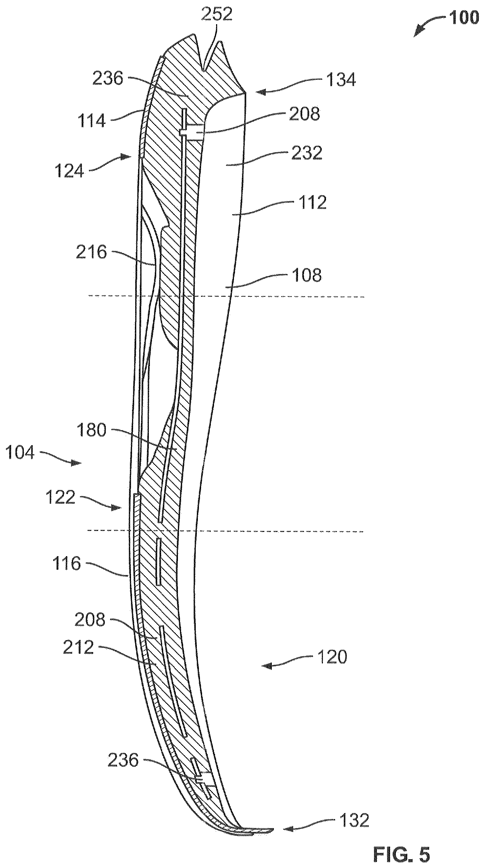

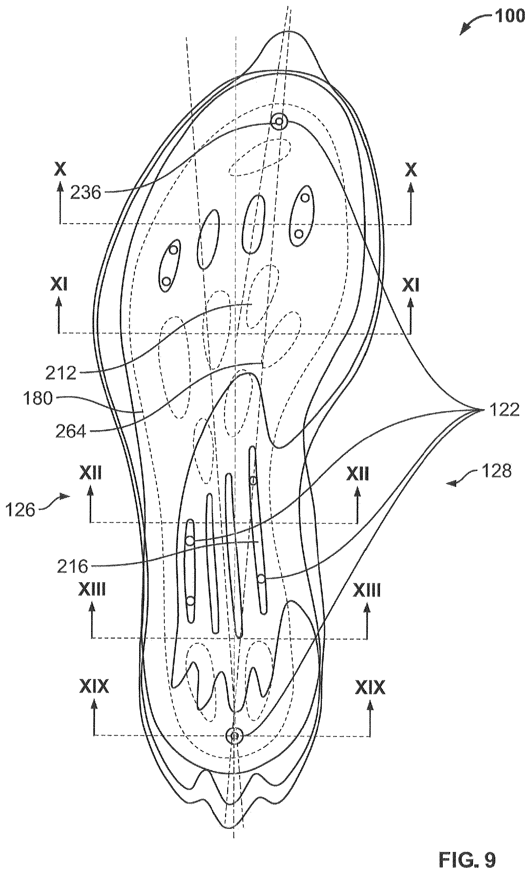

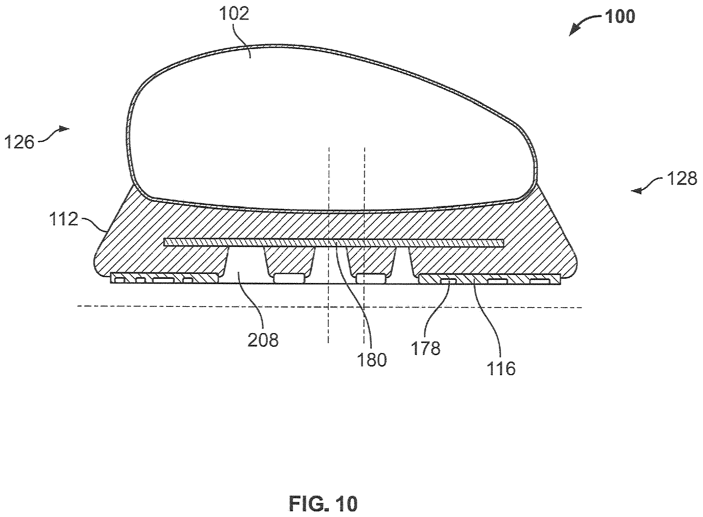

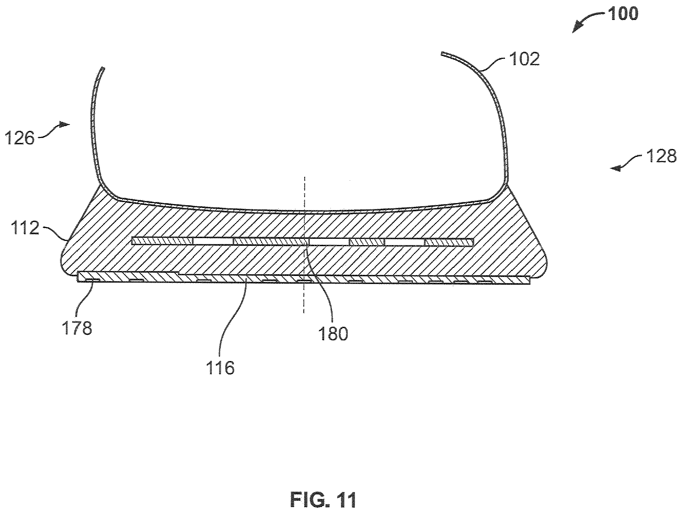

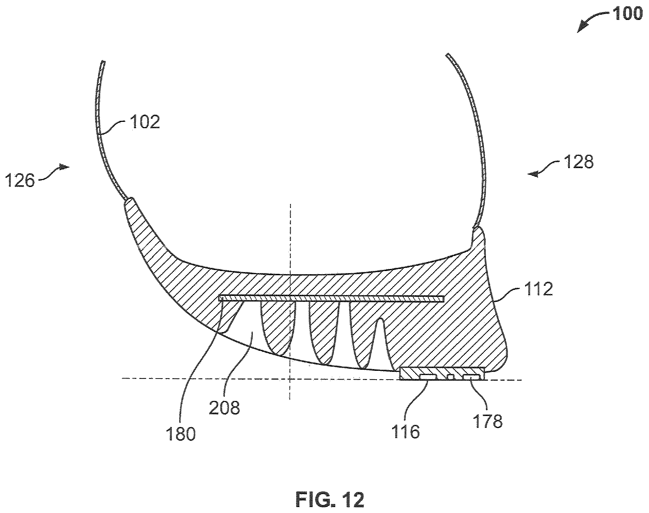

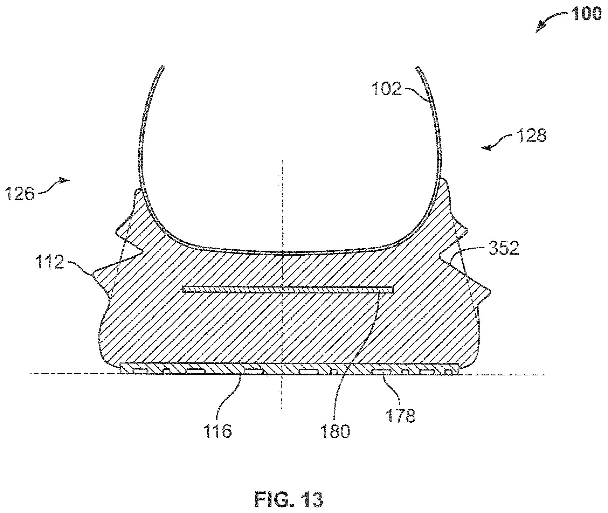

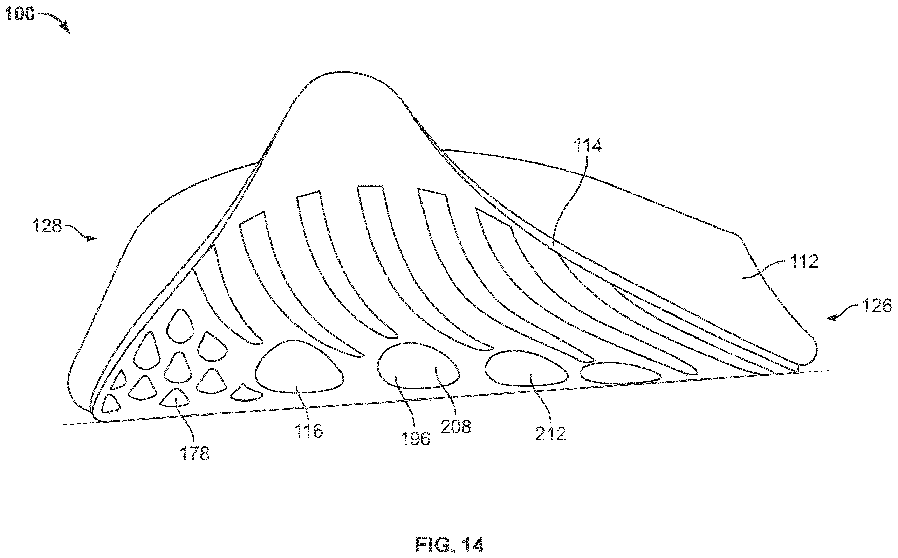

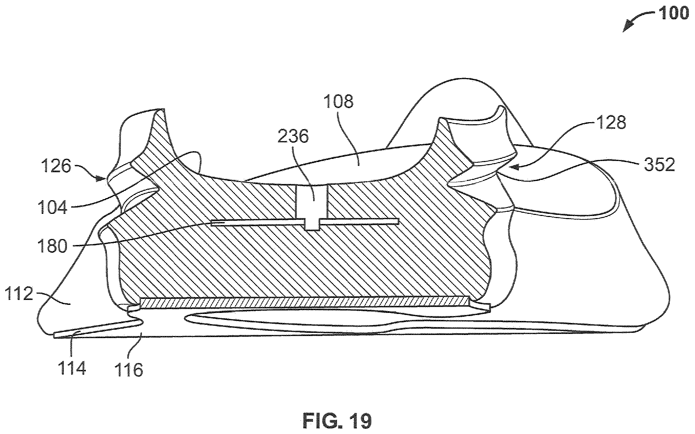

FIGS. 1-20 depict an article of footwear 100 including an upper 102 and a sole structure 104. The upper 102 is coupled with the sole structure 104 and together with the sole structure 104 defines an interior cavity 106 (see FIGS. 1 and 2) into which a foot of a user may be inserted. In some cases, the upper 102 may also include an insole 108 (see FIGS. 1 and 2) positioned within the interior cavity 106 that may be connected to or in contact with an interior surface of the article of footwear 100. The insole 108 may directly contact a user's foot while the article of footwear 100 is being worn. In some embodiments, the upper 102 upper may include a liner (not shown) that can make the article of footwear 100 more comfortable to wear, for example, by reducing friction between the foot of the user and the article of footwear 100 when the article of footwear 100 is being worn, or by providing moisture wicking properties. The liner may line the entire interior cavity 106 or only a portion of the interior cavity 106. In other embodiments, a collar or binding 111 may surround the opening of the interior cavity 106 to secure the liner to the upper 102 or to provide an aesthetic element on the article of footwear 100. Furthermore, the sole structure 104 includes a midsole 112 and an outsole 114 coupled to and disposed generally below the midsole 112. The outsole 114 defines a bottom surface 116 of the article of footwear 100 that is configured to contact the ground. In some embodiments, lugs (not shown) or other tractive elements may be provided along the bottom surface 116 to provide a user with increased traction.

The article of footwear 100 generally defines a forefoot region 120, a midfoot region 122, and a heel region 124. The forefoot region 120 generally corresponds with portions of the article of footwear 100 that encase portions of the foot that include the toes, the ball of the foot, and joints connecting the metatarsals with the toes or phalanges. The midfoot region 122 is proximate and adjoining the forefoot region 120, and generally corresponds with portions of the article of footwear 100 that encase the arch of a foot, along with the bridge of a foot. The heel region 124 is proximate and adjoining the midfoot region 122 and generally corresponds with portions of the article of footwear 100 that encase rear portions of the foot, including the heel or calcaneus bone, the ankle, or the Achilles tendon.

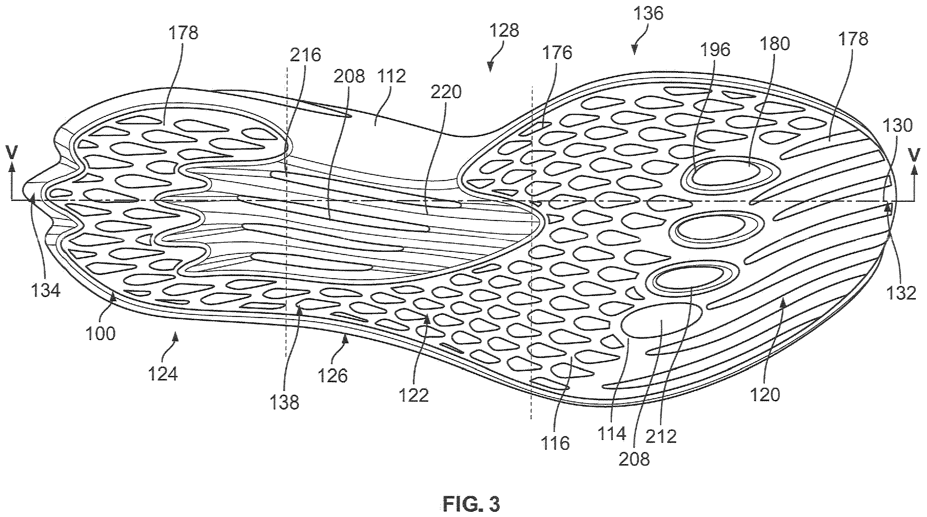

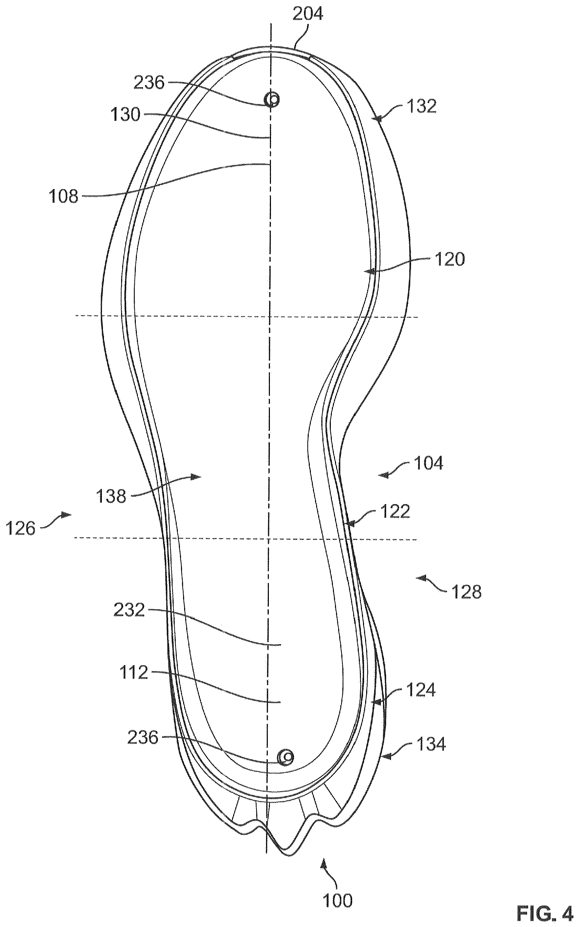

The article of footwear 100 also defines a lateral side 126 (see FIG. 1), and a medial side 128 (see FIG. 2). Further, the article of footwear 100 defines a longitudinal axis 130 (see FIGS. 3 and 4) that extends from a toe end 132, located at a distal end of the forefoot region 120, to a heel end 134, located at a distal end of the heel region 124 opposite the toe end 132. The longitudinal axis 130 defines a middle of the article of footwear 100 with the lateral side 126 extending from one side of the longitudinal axis 130 and the medial side 128 extending from the other. Put another way, the lateral side 126 and the medial side 128 adjoin one another along the longitudinal axis 130. In particular, the lateral side 126 corresponds to an outside portion of the article of footwear 100 and the medial side 128 corresponds to an inside portion of the article of footwear 100. As such, left and right articles of footwear have opposing lateral 126 and medial 128 sides, such that the medial sides 128 are closest to one another when a user is wearing the article of footwear 100, while the lateral sides 126 are defined as the sides that are farthest from one another while being worn.

The forefoot region 120, the midfoot region 122, the heel region 124, the medial side 128, and the lateral side 126 are intended to define boundaries or areas of the article of footwear 100, and collectively span an entire length of the article of footwear 100, from the toe end 132 to the heel end 134. It should be appreciated that aspects of the disclosure may refer to portions or elements that are coextensive with one or more of the forefoot region 120, the midfoot region 122, the heel region 124, the medial side 128, or the lateral side 126. The forefoot region 120 extends from the toe end 132 to a widest portion 136 of the article of footwear 100, *i.e.,* a distance between the medial side 128 and the lateral side 126 of the sole structure 104. The midfoot region 122 extends from the widest portion 136 to a thinnest portion 138 of the article of footwear 100, *i.e.,* a distance between the medial side 128 and the lateral side 126 of the sole structure 104. The heel region 124 extends from the thinnest portion 138 to the heel end 134 of the article of footwear 100.

Referring to FIG. 3, in particular, the lateral side 126 begins where the toe end 132 intersects the longitudinal axis 130 and bows outward, *i.e.,* away from the longitudinal axis 130, along the forefoot region 120 toward the midfoot region 122. At the widest portion 136, the lateral side 126 bows inward, *i.e.,* toward the longitudinal axis 130 toward the thinnest portion 138, entering the midfoot region 122. Upon reaching the thinnest portion 138, the lateral side 126 bows outward and extends into the heel region 124. The lateral side 126 then bows back inward toward the heel end 134 and terminates where the heel end 134 intersects with the longitudinal axis 130.

Still referring to FIG. 3, the medial side 128 begins where the toe end 132 intersects the longitudinal axis 130 and bows outward, *i.e.,* away from the longitudinal axis 130, along the forefoot region 120 toward the midfoot region 122. At the widest portion 136, the medial side 128 bows inward, *i.e.,* toward the longitudinal axis 130, toward the thinnest portion 138, entering the midfoot region 122. Upon reaching the thinnest portion 138, the medial side 128 bows outward and extends into the heel region 124. The medial side 128 then bows back inward toward the heel end 134 and terminates where the heel end 134 intersects with the longitudinal axis 130.

It should be understood that numerous modifications may be apparent to those skilled in the art in view of the foregoing description, and individual components thereof, may be incorporated into numerous articles of footwear. Accordingly, aspects of the article of footwear 100 and components thereof, may be described with reference to general areas or portions of the article of footwear 100, with an understanding the boundaries of the forefoot region 120, the midfoot region 122, the heel region 124, the lateral side 126, and/or the medial side 128 as described herein may vary between articles of footwear. Furthermore, aspects of the article of footwear and individual components thereof, may also be described with reference to exact areas or portions of the article of footwear 100 and the scope of the appended claims herein may incorporate the limitations associated with these boundaries of the forefoot region 120, the midfoot region 122, the heel region 124, the lateral side 126, and/or the medial side 128 discussed herein.

With continued reference to FIGS. 1 and 2, an upper is configured to at least partially enclose the foot of a user and may be made from one or more materials. As illustrated in FIGS. 1 and 2, the upper 102 is disposed above and is coupled to the sole structure 104, and defines the interior cavity 106 that receives and secures a foot of a user. The upper 102 may be defined by a foot region 140 and an ankle region 142. In general, the foot region 140 extends upwardly from the sole structure 104 and through the forefoot region 120 and the midfoot region 122, and, in some embodiments, into the heel region 124. The ankle region 142 is primarily located in the heel region 124; however, in some embodiments, the ankle region 142 may partially extend into the midfoot region 122.

The upper 102 extends along the entirety of each of the medial 128 and lateral 126 sides, as well as extending over the top of the forefoot region 120 and around the heel region 124. An upper can be formed from one or more layers. For example, many conventional uppers are formed from multiple elements, e.g., textiles, polymer foam, polymer sheets, leather, and synthetic leather, that are joined through bonding or stitching at a seam. In various embodiments, a knitted component may incorporate various types of yarn that may provide different properties to an upper. In other embodiments, the upper may incorporate multiple layers of different materials, each having different properties, for example, increased breathability or moisture wicking.

With reference to the material(s) that comprise the upper 102, the specific properties that a particular type of yarn will impart to an area of a knitted component may at least partially depend upon the materials that form the various filaments and fibers of the yarn. For example, cotton may provide a soft effect, biodegradability, or a natural aesthetic to a knitted material. Elastane and stretch polyester may each provide a knitted component with a desired elasticity and recovery. Rayon may provide a high luster and moisture absorbent material, wool may provide a material with an increased moisture absorbance, nylon may be a durable material that is abrasion-resistant, and polyester may provide a hydrophobic, durable material.

Other aspects of a knitted component may also be varied to affect the properties of the knitted component and provide desired attributes. For example, a yarn forming a knitted component may include monofilament yarn or multifilament yarn, or the yarn may include filaments that are each formed of two or more different materials. In addition, a knitted component may be formed using a particular knitting process to impart an area of a knitted component with particular properties. Accordingly, both the materials forming the yarn and other aspects of the yarn may be selected to impart a variety of properties to particular areas of the upper 102.

A number of other features may also be coupled to or included in an upper to provide or enhance certain properties of the upper. For example, the upper 102 can include a tongue (not shown) that may further include a tongue lining and/or a foam pad to increase comfort. The tongue may be a separate component that is attached to the upper 102 or it may be integrally formed with one or more layers of the upper 102.

Additionally, an upper can also include a tensioning system (not shown), e.g., laces, that allows a user to adjust the upper to fit a foot of a user. The tensioning system can extend through a midfoot region and/or a forefoot region of the upper and may be attached to the upper by an attachment structure. For example, in an embodiment, the upper 102 includes a plurality of holes, e.g., punch holes or eyelets, that are configured to slidably receive the laces so that the user can secure the article of footwear 100 to a foot, *e.g.,* by tightening and tying the laces. In other embodiments, a tensioning system may be a laceless fastening system, or other type of tensioning system known in the art.

Further, in some instances, other elements, e.g., plastic material, logos, trademarks, etc., may also be applied and fixed to an exterior surface of the upper 102 using glue or a thermoforming process. In some embodiments, the properties associated with the upper 102, *e.g.,* a stitch type, a yarn type, or characteristics associated with different stitch types or yarn types, such as elasticity, aesthetic appearance, thickness, air permeability, or scuff-resistance, may be varied.

With continued reference to FIGS. 1 and 2, the upper 102 is joined with the sole structure 104, which extends between the upper 102 and the ground. The sole structure 104 includes the midsole 112 and the outsole 114, and a plate 180 (e.g., a sole plate). In other embodiments, a sole structure may also include one or more other components, which may include a lasting board, a plate, or a strobel board (not shown), that are disposed between a midsole and an upper. Additionally, in some cases, a sole structure can further include a heel cup (not shown) that couples with the upper in the heel region via an adhesive or stitching and provides additional support to a heel of a user. More specifically, a heel cup may be made from a rigid or semi-rigid material, for example TPU or a composite that allows the heel cup to flex or give as needed when a user is running or engaging in other activities, but otherwise provide more rigid support to the heel of a user. In some embodiments, a heel cup can be made of a translucent or clear TPU and may be used to enhance the aesthetic appeal.

The midsole 112 is defined as the portion of the sole structure 104 that extends between the upper 102 and the outsole 114. That is, the midsole 112 can be coupled with the upper 102, *e.g.,* via the insole 108, at an upper surface of the midsole 112 and can be coupled with the outsole 114 on a lower surface of the midsole 112, opposite the upper 102. The midsole 112 extends along the length of the sole structure 104, throughout the forefoot region 120, the midfoot region 122, and the heel region 124. Additionally, the midsole 112 extends across the width of the sole structure 104 from a lateral side 126 to a medial side 128. However, in other embodiments, a midsole may include discrete midsole portions that only extend through portions of any of the forefoot region 120, the midfoot region 122, and the heel region 124. Accordingly, in some embodiments, a midsole may not be a continuous midsole and may include multiple discrete midsole portions

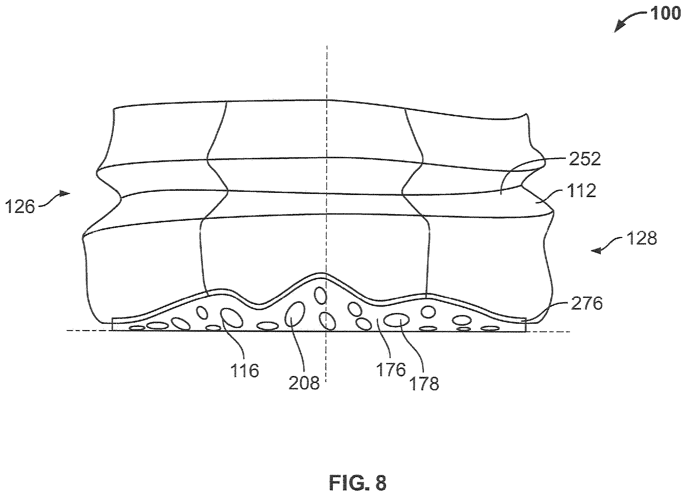

In general, the midsole 112 acts to cushion a user from the impact caused by the user's foot striking the ground. Put another way, the midsole 112 absorbs the impact resulting from a foot of a user coming into contact with the ground. To provide the desired cushioning characteristics, the thickness of the midsole 112, *e.g.,* a dimension taken along a direction that is normal to the bottom surface 116, can be varied, with thicker regions providing greater cushioning and stability, e.g., the heel region 124 and thinner regions providing lesser cushioning and greater flexibility, e.g., the forefoot region 120. For example, as shown in FIG. 8, the midsole 112 includes an indented region 252 of the heel end 134 of the midsole 112 may help to reduce the weight of the shoe, leading the wearer to fatigue slower.

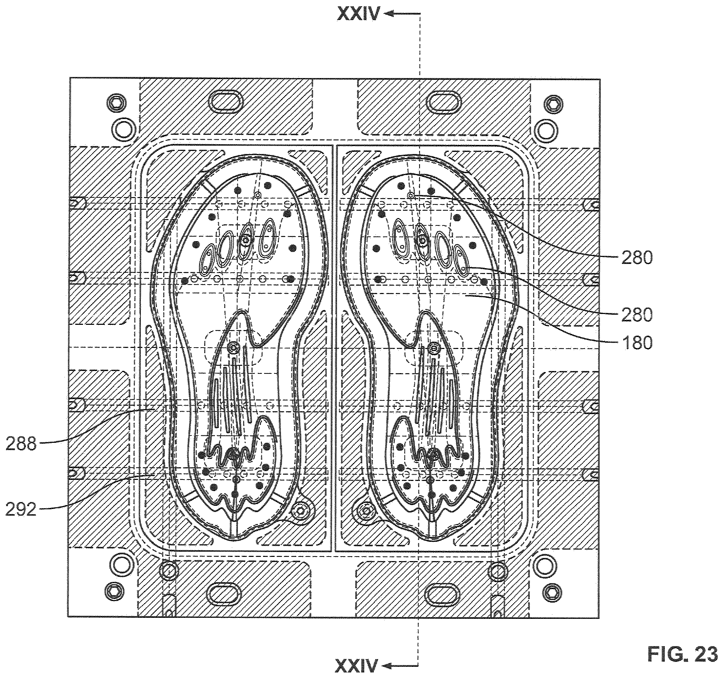

As illustrated in FIGS. 3-7, the midsole 112 may include one or more apertures 208, which can extend partially or entirely through the midsole 112. The apertures 208 can be positioned to allow for various internal structures (e.g., a plate) to be supported during molding of the sole structure 104, so as to be at least partially embedded within the midsole 112. For example, during an injection molding process, the plate 180 may be held in place by anchors 280 (see FIG. 23) that can form the aperture 208 once the material of the midsole 112 is injected into a mold while the plate 180 is positioned within the mold.

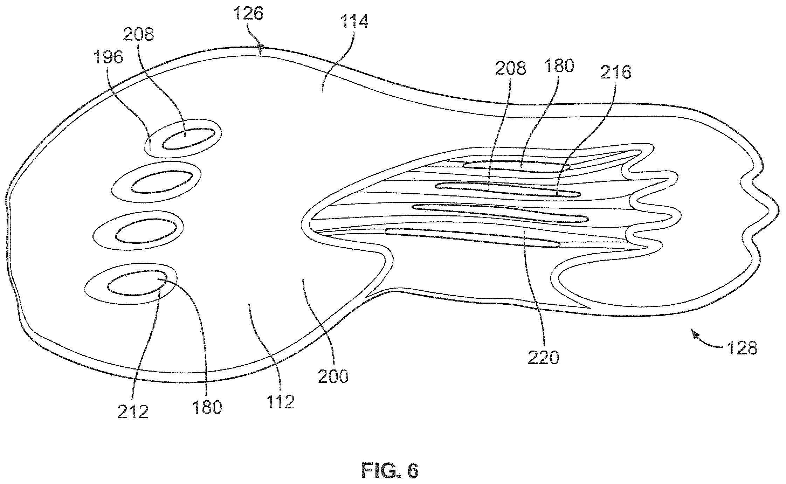

As illustrated in FIGS. 3 and 6, a first group of apertures 212 can be located along a midsole bottom surface 200 in the forefoot region 120. The first group of apertures 212 may be aligned with the through holes 196 arranged on the outsole 114 (see FIG. 3). Additionally, a second group of one or more apertures 216 may extend from the midfoot region 122 toward the heel region 124. The second group of apertures 216 may be divided by a plurality of ridges 220 that can extend between the apertures 216. The apertures 208 may have varying depths, for example, the apertures 208 may have depths of about 0.5 mm, 1 mm, 2 mm, 3 mm, 4 mm, 5 mm, 6 mm, 7 mm, 8 mm, 9 mm, 10 mm, 15 mm, 20 mm, or any range therein (e.g., between about 0.5 mm and about 3mm), such that the plate 180 is exposed in the apertures 208. In some embodiments, the apertures 208 may include various shapes (e.g., oblong, trapezoidal, rectangular, etc.). The apertures 208 may reduce the weight of the shoe, allowing the wearer to fatigue at a slower rate, and can also serve to allow a plate or other internal component to be positioned during a molding process, as described in greater detail below.

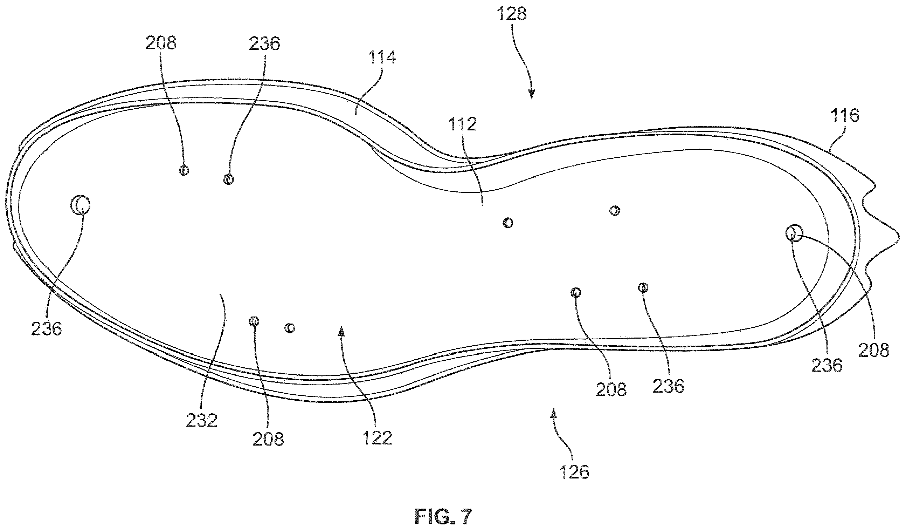

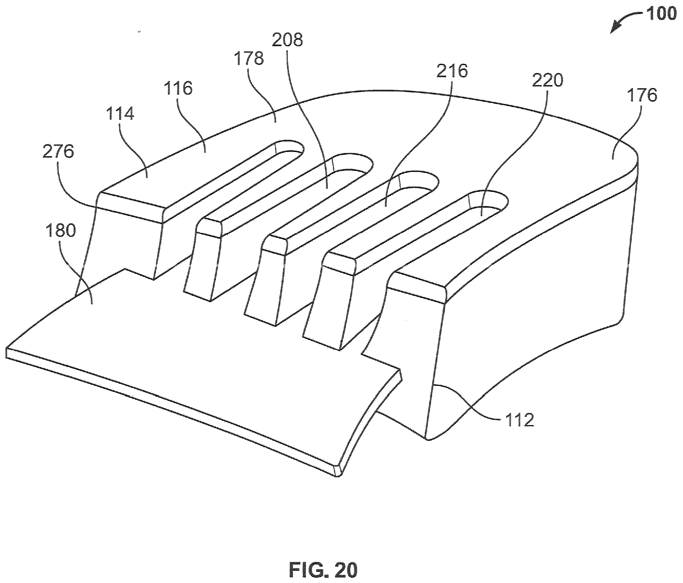

The midsole top surface 232 (see FIG. 7) may include the one or more apertures 208 formed as holes 236 in the top surface 232. As shown in FIG. 20, the holes 236 can extend from the midsole top surface 232 through the plate 180. In other embodiments, the holes 236 may extend from the midsole top surface 232 to the plate top side 256. In general, the holes 236 can also assist with aligning the plate 180 during an injection molding process, as described below.

As mentioned above, the holes 236, as well as the apertures 208 can aid with positioning the plate 180 in a mold, so that it can be embedded in the sole structure 104. That is, and as will be described in greater detail below, the plate 180 may be held in place during manufacturing through a portion of a mold that extends through the apertures 208 on the midsole bottom surface 200 and the holes 236 on the midsole top surface 232. More specifically, as described below, the plate 180 may be held in place during manufacturing by anchors 280 (see FIG. 23) that extend through the holes 236 on the midsole top surface 232. Correspondingly, the anchor holes 236 may form a negative shape of the anchors 280 once the sole structure 104 is molded.

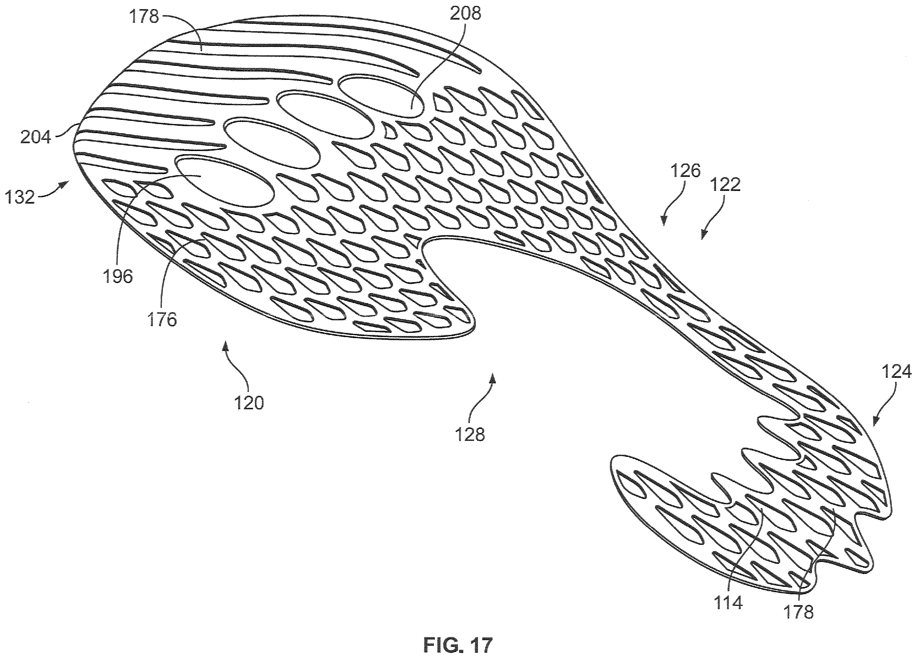

The outsole 114 is defined as a portion of the sole structure 104 that at least partially contacts an exterior surface, e.g., the ground, when the article of footwear 100 is worn. Like the midsole 112, the outsole 114 can extend along the length of the sole structure 104, throughout the forefoot region 120, the midfoot region 122, and the heel region 124, and across the width of the sole structure 104 from a lateral side 126 to a medial side 128. However, in other embodiments, an outsole may include discrete outsole portions that only extend through portions of any of the forefoot region 120, the midfoot region 122, and the heel region 124. In some embodiments, the outsole 114 may be fabricated from an injection molded thermoplastic or rubberized material, e.g., thermoplastic polyurethane, EVA, polyolefin elastomer, a rubber material, or mixtures thereof, which can resist wear resulting from contact with the ground in addition to increasing traction. Relatedly, as illustrated in FIGS. 3 and 17, the outsole 114 may include the tread pattern 178, which may provide the wearer an increased ability to grip surfaces such as basketball courts, soccer fields, mountain trails, sidewalks, gravel roads, etc.

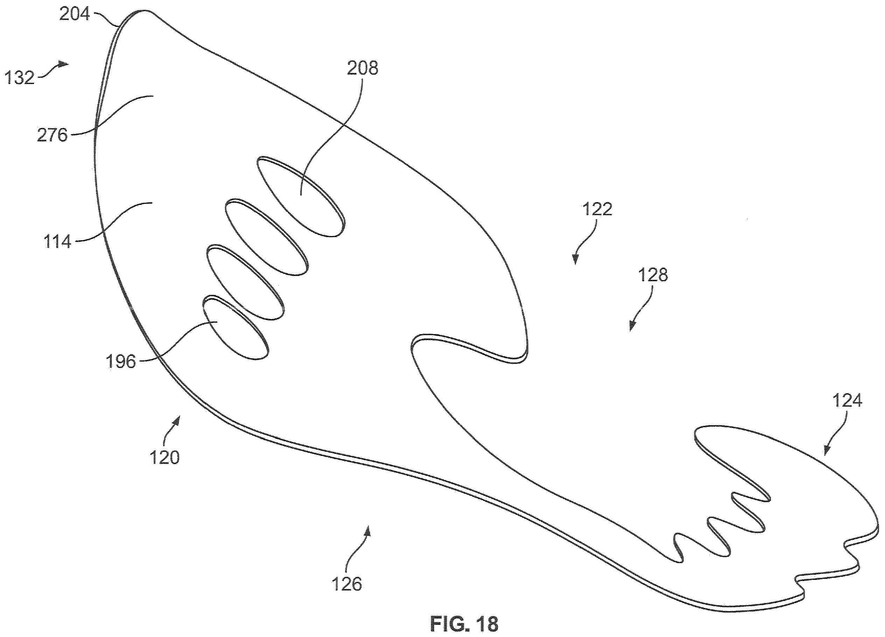

In some cases, the outsole 114 may further include through holes 196, which may be oblong and are located in the forefoot region 120. FIGS. 17 and 18 depict the outsole bottom surface 176 and an outsole top surface 276, respectively. As described in greater detail below, the outsole 114 is preferably co-injected with the midsole 112. The outsole 114 may not cover the midfoot region 122 in order to provide more flexibility around the arch of the foot, or to generally expose the apertures 208 in the midfoot region 122, for example, so that anchors can extend through the outsole 114 to be receive by the midsole 112 during a molding process, as generally described below. In the present embodiment, the outsole 114 covers only a portion of a midsole bottom surface 200. That is, the outsole 114 extends throughout the forefoot region 120, along the lateral side 126 in the midfoot region 122, and wraps around a periphery of the heel region 124 from the lateral side 126 to the medial side 128. Further, the outsole 114 includes a toe guard 204 positioned at the toe end 132, which wraps upwardly from the bottom surface 116 toward the upper 102.

In some case, shanks or plates can be provided within a sole structure to protect a wearer who, for example, may be walking, jogging, or running on rough surfaces, on a path with rocks, on a construction site with nails, or any other place that may have treacherous terrain. Additionally, plates may also be included in sole structures to provide, for example, increased shock absorption, resistance to bending near the wearer's arch, support and stability, sturdiness, or comfort for a wearer. Correspondingly, plates can be configured for a particular application in order to provide one or more desired properties to a sole structure. For example, plates that are able to more readily flex may be particularly suited for wearers such as trail-runners in order to provide a wearer with extra support while also protecting the bottom of a user's foot from sharp rocks, while plates with more rigidity may be particularly suited for hobbies such as climbing in order to minimize in-shoe feet pressure.

Correspondingly, plates can be made of one of more materials to impart a desired property to a sole structure. For example, a plate can be one or a combination of the following materials including, for example, metals (*e.g.,* steel, aluminum, etc.), polymers (*e.g.,* nylon, TPU, etc.), or composites (*e.g*., fiberglass, Kevlar, or carbon-fiber composites, etc.). For example, a plate made of carbon fiber may reduce the weight of the shoe while retaining or improving the energy returned to the wearer during physical exercise. That is, a carbon fiber plate can be configured to store energy as the wearer's heel strikes the ground and then release the energy back to the wearer at toe-off. The benefits of the carbon fiber plate may include a reduction in fatigue for the wearer, as well as a greater return of energy to the wearer, as compared with conventional sole structures. Further carbon fiber has a low coefficient of thermal expansion, ensuring that the plate does not readily shrink and expand during exposure to large amounts of heat, such as during exercise or during the manufacture of the sole structure. The dimensional stability of carbon fiber may reduce stress, formation failure during manufacturing, and breakdown of the midsole material, leading to a more reliable and longer lasting article of footwear.

Additionally, plates may be advantageously placed within a sole structure. For example, a plate can be positioned between or within one or more components of a sole structure, *e.g*., any of the outsole the insole, and the midsole. Correspondingly, plates can be sized and shaped to impart specific properties to particular areas of a sole structure. For example, a plate may span any combination of the insole, midsole, and outsole. For example, a plate may be partially embedded in a midsole at a heel region and sandwiched between the midsole and outsole at a toe region. As illustrated in FIGS. 3, 5, 9-13, 19, and 20, a plate 180 may be embedded, either fully or partially, in the midsole 112, and may be partially visible through apertures 208 in the sole structure 104 (e.g., along a ground engaging surface thereof).

With conventional construction techniques, plates are typically whipstitched, glued, or tacked in place. However, the need to glue materials together can increase the required manufacturing costs and time, as well as limit a manufacturer's choice of materials that may be used to create the article of footwear. Additional limitations with conventional techniques include limitations on bonding sights for the glue. Further, if stitching is used it may create weak points on an article of footwear. In order to reduce the manufacturing time, as well as the number of bonding sights for glue or other coupling methods on an article of footwear, the plate may preferably be embedded or partially embedded within the insole, midsole, or outsole. The plate may be fixed in place while the insole, midsole, or outsole is manufactured by processes such as injection molding, as described below. Once the insole, midsole, or outsole is finished, the material used to manufacture the insole midsole, or outsole may partially or completely surround the plate, causing the plate to be secured in place without the need for traditional bonding by adhesives or stitching.

FIGS. 3, 5, 6, 9-13, 19, and 20 illustrate the plate 180 being embedded in the sole structure 104, and more specifically, the midsole 112. In other embodiments, the plate 180 can be arranged differently within the sole structure 104. For example, the plate 180 may pass through one or both of the midsole 112 or the outsole 114. Further, the plate 180 can extend between the midsole 112 and the outsole 114, extend between the midsole 112 and the upper 102, or along the lower surface of the outsole 114. Correspondingly, it is possible that the plate 180 may be fully or partially embedded within the sole structure 104.

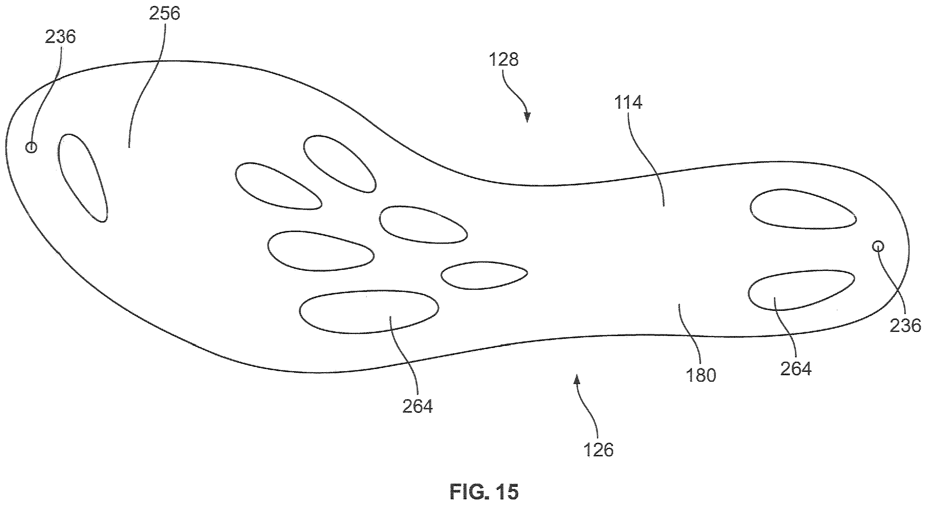

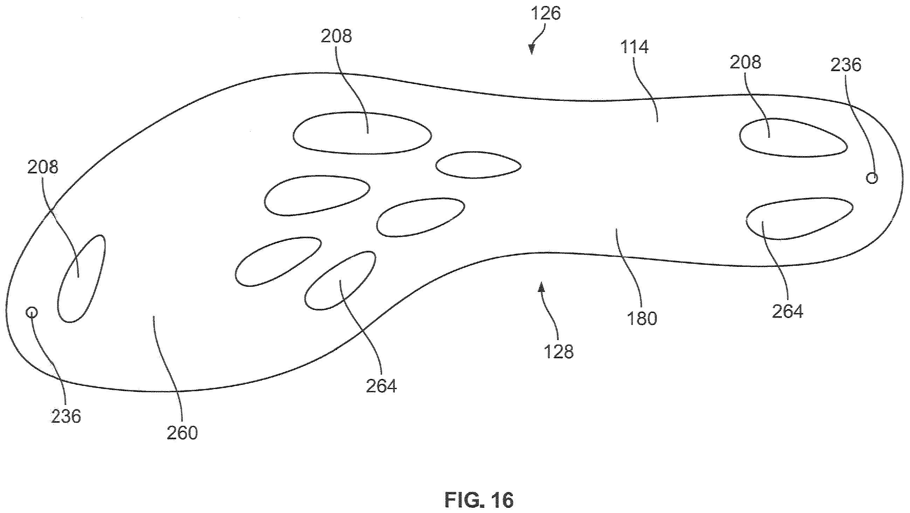

Embedding the plate 180 in the sole structure 104 may help to hold the plate 180 in place within the sole structure 104 without the need for conventional securing methods, such as adhesives or stitching. To embed the plate 180 within the sole structure 104, the plate 180 can be co-injected or otherwise co-molded with the midsole 112 and outsole 114, as generally described below, which may provide a secure connection between the plate 180 and the other components of the sole structure 104. For example, by co-molding the plate with the midsole 112 and the outsole 114, the plate 180 may be held in place by the material used to construct the midsole 112. More specifically, referring to FIGS. 15 and 16, the plate 180 can include the one or more openings 264 that extend through the plate 180 from a plate top side 256 and a plate bottom side 260. During injection of the midsole 112, the material of the midsole 112 may flow through the openings 264. Thus, once the midsole material has solidified, the material passing through the openings 264 can mechanically hold the plate 180 within the midsole 112 without the need for an adhesive or other coupling mechanism.

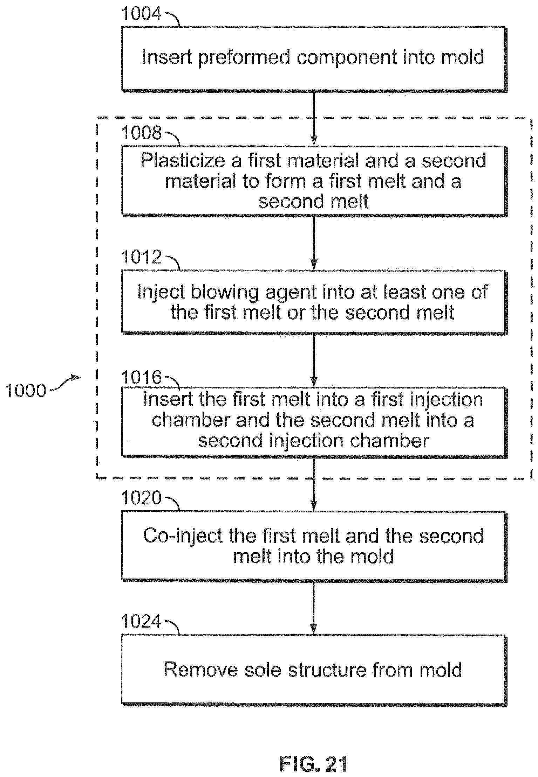

FIG. 21 illustrates a method 1000 for manufacturing a sole structure, *e.g*., a midsole, an outsole, and/or a plate, which allows for single-shot or single-step injection molding, wherein multiple components can be formed together within a single mold. While the method 1000 is described below with reference to various steps, it is appreciated that not all steps may be required. Further, the steps may not be carried out in the order presented below, and some steps may be performed simultaneously. Moreover, while the method 1000 may be described with reference to the sole structure 104, method 1000 may also be used to form other sole structures or any other type of components that may include foam, rubber, or other materials that can be injection molded.

In general, and as described below, the method 1000 can be used to co-inject one or more materials into a mold cavity to form multiple components of a sole structure via single-step injection. Additionally, an injection line can be configured to provide isolation between various processing steps (e.g., plasticization, mixing of a blowing agent, injection) so that downstream processes have minimal to no effect on upstream processes. This enables faster cycle times and improves consistency (e.g., consistency in density and size), as compared with conventional injection molding techniques, and more generally, conventional method of forming supercritical foam components.

For example, a first material of the midsole 112 and a second material of the outsole 114 can be co-injected into a mold cavity (*e.g*., via respective first and second injection ports), where they can solidify together to form the sole structure 104. The first and second materials can be the same or different (*e.g.,* to have one of more different properties, color, chemical composition, viscosity, density, etc.). As described below, the at least first and second materials may travel through respective injection lines so that they remain separated from one another until they are co-injected into a mold. The injection lines may include of one or more of a plasticization zone 368 (e.g., a first zone), a mixing zone 372 (e.g., a second zone), an injection chamber 376 (e.g., a third zone), and an injection passage 304, which can be isolated from one another so that processes at each zone do not affect processes at the other zones. The separation of each zone of the molding machine may allow for more precise control of pressure, temperature, and material states (*e.g*., liquid, solid, supercritical fluid, supercritical foam, etc.) in each zone or chamber, as compared with traditional molding methods.

In some cases, it may be advantageous to include components in the sole structure 104 that are preformed and not co-injected. For example, the plate 180 can be a pre-formed carbon fiber or metal plate that may require a different process to form (*e.g*., compression molding or stamping), and therefore may not lend itself to being co-injected with the rest of the sole structure 104. Correspondingly, in some cases, the method 1000 may optionally initiate at step 1004, in which one or more preformed components can be inserted into a cavity of a mold 292.

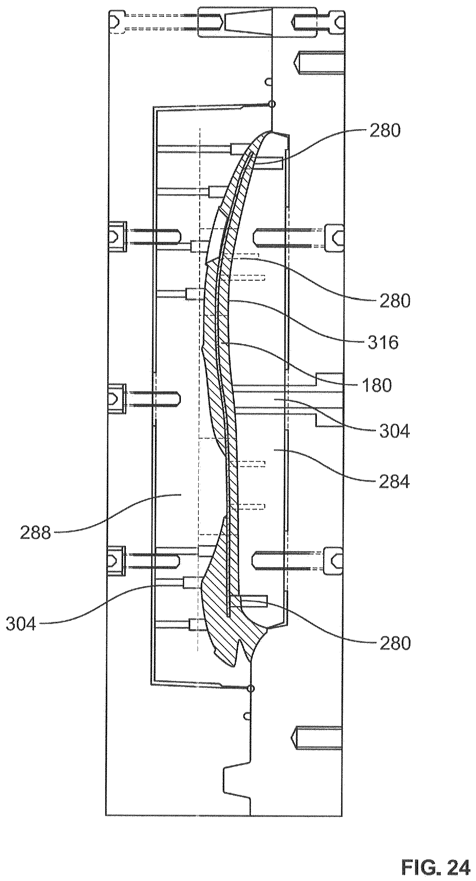

For example, with additional reference to FIGS. 23-25, an injection molding machine 356 can include the mold 292 having an upper plate 284 and a lower plate 288 that define a cavity 316 therein, which can be the negative shape of the sole structure 104. A plurality of anchors 280 can extend inwardly from the walls of the cavity 316. The anchors 280 can be positioned to receive and support the plate 180 at a desired position with the cavity 316 during injection of the first and second materials. Accordingly, the plate 180 can be effectively suspended within the cavity 316 so that the outsole 114 and midsole 112 can be formed around the plate 180, such that the plate 180 will be embedded in the sole structure 104, as generally described above. Relatedly, the anchors 280 can form the apertures 208, through holes 196, and holes 236 that are present in the outsole 114 and the midsole 112, and may therefore be shaped accordingly.

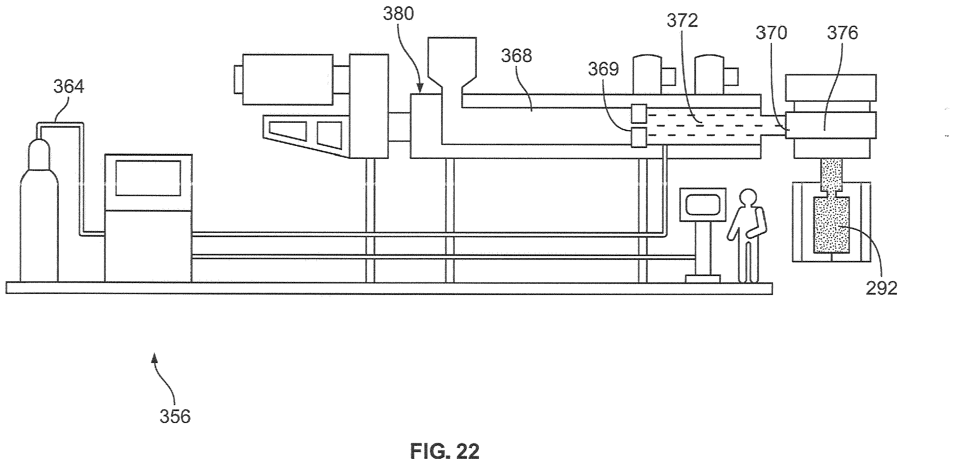

Continuing, at step 1008 the method 1000 can include the preparation of materials to be injected into the mold 292. Each material being injected into the mold 292 can be prepared separately, for example, in separate injection lines 380 (see FIG. 22), so that they do not mix or otherwise contact one another until they are co-injected into the mold 292. It is appreciated that while FIG. 22 depicts a single injection line 380, additional similar injection lines may be provided for each additional material so that each material can be co-injected into the mold 292. In general, preparation of a material to be injected at step 1008 can include plasticizing of one or more materials of a sole structure at step 1008. During plasticization, solidified material (*e.g*., solidified pellets of material) can be inserted into a plasticization zone 368, for example, an extruder, where the temperature of the material is increased (*e.g*., through friction, compression, or application of an auxiliary heat source) to form a melt. For example, solidified first material can be inserted into a first plasticization zone to form a first melt and solidified second material can be inserted into a second plasticization zone to form a second melt. In other embodiments, each additional material can be inserted into a corresponding plasticization zone. For example, where a midsole is a dual density midsole made of the first material and a third material, the third material can be plasticized in a corresponding third plasticization zone. Similarly, where a plate is made of an injectable material, *e.g.,* a thermoplastic, a fourth material of the plate can be plasticized in a corresponding fourth plasticization zone

At step 1012, preparation of the material can include injecting a blowing agent into a melt within a mixing zone to form a single-phase solution. For example, the first material melt or the second material melt may travel from the plasticization zone 368 through an orifice 369 (e.g., an orifice plate) to reach a mixing zone 372 (see FIG. 22). The orifice 369 may prevent passage of a blowing between the plasticization zone 368 and the mixing zone 372, so as to isolate the plasticization zone 368 from the mixing zone 372. In this way, the orifice 369 can isolate processes between the mixing zone 372 and the plasticization zone 368.

The blowing agent is a supercritical fluid (*i.e.,* supercritical nitrogen, carbon dioxide, or a combination thereof). The single-phase solution can be formed by pressurizing a mixture of the supercritical fluid and melted material from the mixing zone 372. That is, the supercritical fluid can be injected into the mixing zone 372 and the mixing zone 372 may be heated and pressurized in order to maintain the single-phase solution within the mixing zone 372. In this way, the supercritical fluid can dissolve into the melted material to form a single-phase solution that can be injected into the mold 292. For example, a first material melt may travel to a first mixing zone where a blowing agent can be injected via a gas delivery system 364 into the melted first material to form a first single-phase solution with the first material. Similarly, a second material melt may travel to a second mixing zone where a blowing agent can be injected via a gas delivery system 364 into the melted second material to form a second single-phase solution with the second material. Each additional material being co-injected may undergo similar processes at step 1012. However, it is also possible that not all materials will undergo mixing with a blowing agent, for example, where a second material is a material of the outsole 114 that is to be made of a rubberized, or other un-foamed material. In turn, the supercritical fluid can be dissolved into the material within the mixing zone 372 and the orifice 369 can prevent supercritical fluid from entering the plasticization zone 368, maintaining isolation therebetween.

At step 1016, the first and second materials may travel to respective first and a second injection chambers. As illustrated in FIG. 22, an injection chamber 376 may be separated from the mixing zone 372 by an orifice 370 that can flow from an injection chamber to a mixing zone during an injection process, thereby isolating the injection chamber form the mixing zone while allowing a desired flow of material from the mixing zone to the injection chamber. For example, the first material (e.g., a first single-phase material made with the first material) may travel to a first injection chamber and a second material supercritical foam may travel to a second injection chamber. In other embodiments, each additional material can form a supercritical foam and travel to a corresponding injection chamber. For example, where a midsole is a dual density midsole made of the first material and a third material, the third material can travel to a third injection chamber. In some cases, each mixing zone may be in fluid communication with multiple injection chambers. For example, the first material may form the melt in step 1008, the supercritical fluid in step 1016, and travel to 1, 2, 3, 4, 5, or more injection chambers in step 1016.

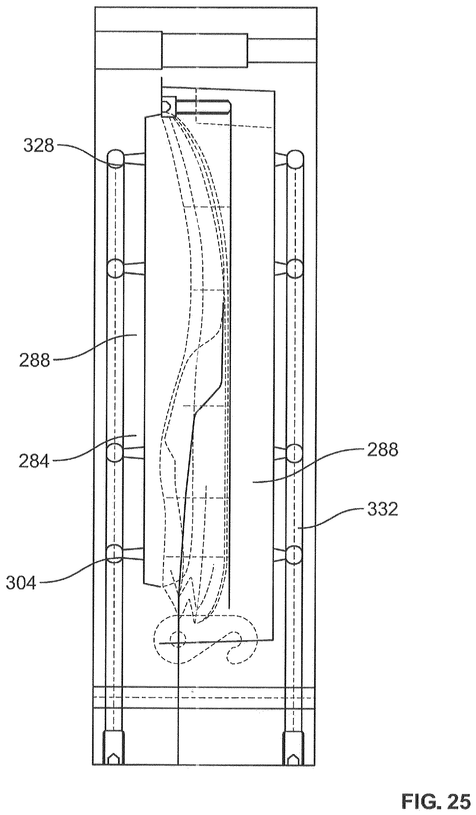

Continuing at step 1020, the first and second injection chambers may inject the first and second materials into the mold. The injection chambers 376 may be in fluid communication with one or more injection passages 304 in each of the lower plate 288 and the upper plate 284 that are in fluid communication with the cavity 316 and are configured to supply the supercritical or other melted material from the injection chamber 376 to the mold 292. The number of injection passages 304 may vary depending on the particular application. Relatedly, as illustrated in FIG. 25, an upper injection line 328 can be provided in the upper plate 284 to supply a first material to its corresponding injection passages 304 and a lower injection line 332 can be provided in the lower plate 288 to supply a second material its corresponding injection passages 304. In this way, each injection line can be configured to supply a single material to one or more injection passages 304.

The melted first and second materials may be delivered to the injection passages 304 using, for example, a line-up injection system or a rotary injection system. The first and second materials may be co-injected into the mold 292 (e.g., a mold cavity of the mold 292) via the injection passages 304 so that each material is in a molten state within the mold 292. Accordingly, the first material and the second material, as well as any other co-injected materials, can be injected simultaneously, or one of the materials may be injected before the other so that, for example, injection of the first material can occur before the injection of the second material, or vice versa.

During injection at step 1020, a pressure gradient may exist between the mold 292 and the injection chambers 376, such that the mold 292 is at a lower pressure than the injection chamber 376. Accordingly, any supercritical fluid may come out of solution within the mold 292. As a result of the drop in pressure, the supercritical fluid contained within any of the injected materials can begin to nucleate and expand, thereby foaming the respective material to form the corresponding component of the sole structure 104 (*e.g.,* a midsole 112). Nucleation of the supercritical fluid forms supercritical-fluid-filled cells within injected material, which expand to increase in volume to fill the mold 292 with the injected material. In this way, expansion of the injected material can then at least partially surround the plate 180 to embed the plate 180 therein.

At step 1024, the sole structure 104 can be removed from the mold 292. The sole structure 104 may be allowed to cool before it is removed from the mold 292 at step 1020. The cooling period may be predetermined to be less than 1 second, more than 1 second, less than 10 seconds, more than 10 seconds, less than a minute, more than a minute, less than 5 minutes, more than 5 minutes, less than 15 minutes, more than 15 minutes, less than 30 minutes, or more than 30 minutes, less than 1 hour, more than 1 hour, or any time frame between (*e.g*., between 1 second and 1 minute).

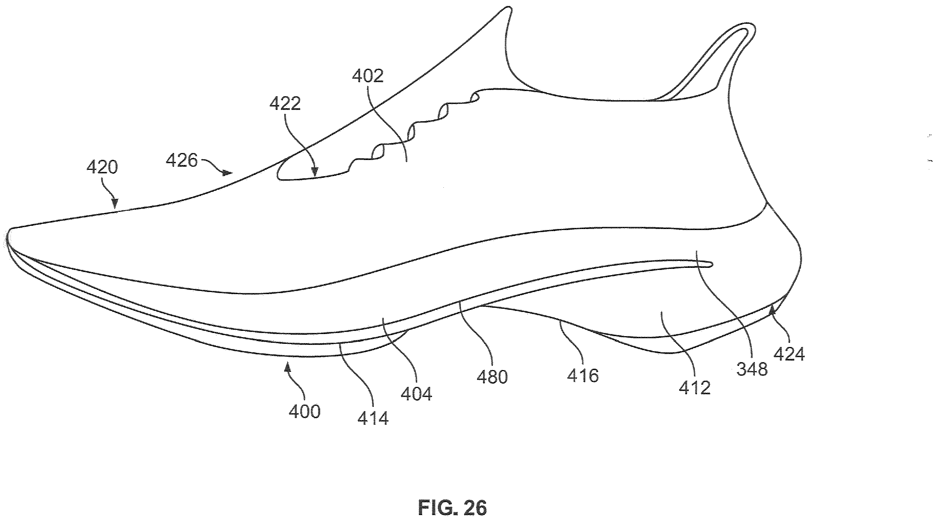

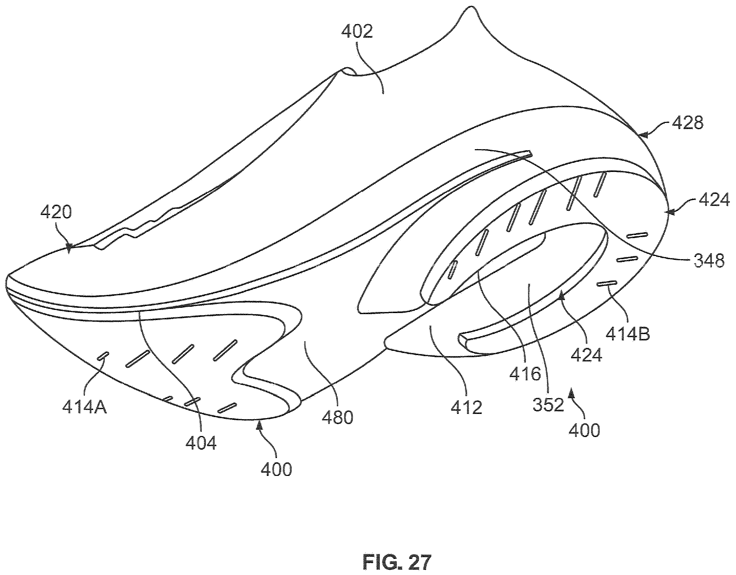

The method 1000, described above, may be used to form sole structures or other types of components. For example, FIGS. 26 and 27 depict another embodiment of the article of footwear 400 that can be manufactured using the method 1000. The article of footwear 400 includes an upper 402 that is attached to a sole structure 404 having a midsole 412 made of a first material, an outsole 414 made of a second material, and a plate 480 made of a third material. The material of each of the midsole 412, the outsole 414, and the plate 480 can be co-injected in accordance with the method 1000 to form the sole structure 404 using a single-step injection.

As illustrated, the plate 480 is partially surrounded by the midsole 412. More specifically, the plate 480 extends along the bottom surface of the midsole 412 through the forefoot region 420 and midfoot region 422, and is disposed in a slit 348 in the heel region 424. The slit 348 extends from the lateral side 426 to the medial side 428 of the midsole 412, such that the plate 480 is exposed along the lateral and medial sides 426, 428. Additionally, the plate 480 is exposed along the bottom surface 416 in the heel region 424. Specifically, the plate 480 is exposed within an indentation 352 defined by the u-shape of the midsole 412 in the heel region 424 (see FIG. 27).

Correspondingly, the outsole 414 is configured as a two-part outsole having a first outsole portion 414A in the forefoot region 420 and a second outsole portion 414B in the heel region 424. In the forefoot region 420, the first outsole portion 414A is secured to plate 480 so that the plate 480 is positioned between the outsole 414 and the midsole 412. In the heel region, the second outsole portion 414B is secured to the midsole 412 so that the midsole 412 is between the outsole 414 and the plate 480. Because the outsole 414 is discontinuous across the midfoot region 422, the plate 480 remains exposed to partially define the bottom surface 416. FIG. 26 depicts the plate 480 coupled to the midsole 412 and partially coupled to the outsole 414.

As mentioned above, a sole structure, including both a midsole and an outsole, can include sole elements to provide the sole structure with areas of varying stability and flexibility. Such sole elements may include a plate which may cause the article of footwear to exhibit different behaviors based on various factors, for example, shape, size, depth, spacing, location, density, flexibility, and/or orientation. In this way, the sole elements can be arranged to tune the flexibility and stability characteristics of a sole structure for a specific activity, such as running or hiking.

As generally described above, injection molding an outsole, midsole, and plate in a single-shot or single-step molding process can reduce the manufacturing time. In addition, the process described above reduces the need for adhesives, stitching, or other methods of coupling components of the sole structure, ultimately reducing the time required to manufacture the article of footwear.

Any of the embodiments described herein may be modified to include any of the structures or methodologies disclosed in connection with different embodiments. For example, certain features and combinations of features that are presented with respect to particular embodiments in the discussion above can be utilized in other embodiments and in other combinations, as appropriate. Similarly, materials or construction techniques, other than those disclosed above, may be substituted or added in some embodiments according to known approaches. Further, the present disclosure is not limited to articles of footwear of the type specifically shown. Still further, aspects of the articles of footwear of any of the embodiments disclosed herein may be modified to work with any type of footwear, apparel, or other athletic equipment.

As noted previously, it will be appreciated by those skilled in the art that while the disclosure has been described above in connection with particular embodiments and examples, the disclosure is not necessarily so limited, and that numerous other embodiments, examples, uses, modifications and departures from the embodiments, examples and uses are intended to be encompassed by the claims attached hereto.

### INDUSTRIAL APPLICABILITY

Numerous modifications to the present invention will be apparent to those skilled in the art in view of the foregoing description. Accordingly, this description is to be construed as illustrative only and is presented for the purpose of enabling those skilled in the art to make and use the invention. The exclusive rights to all modifications which come within the scope of the appended claims are reserved.

## Claims

1. A method of manufacturing a sole structure (104), the method comprising:
melting a first material in a first plasticization zone (368) of a first injection line;
melting a second material in a second plasticization zone of a second injection line;
injecting a first blowing agent into the first material within a first mixing zone (372) of the first injection line, wherein the first blowing agent is a supercritical fluid within the first mixing zone (372); and
co-injecting the first material and the second material into a mold (292) to form the sole structure (104), the first material being injected from a first injection chamber (376) that is separated from the first mixing zone (372) by a first orifice (370) and the second material being injected from a second injection chamber, wherein the first blowing agent nucleates within the mold (292) to expand and foam the first material within the mold (292).

2. The method of claim 1, further comprising injecting a second blowing agent into the second material within a second mixing zone of the second injection line.

3. The method of claim 2, wherein the second blowing agent nucleates within the mold (292) to expand and foam the second material within the mold.

4. The method of any of claims 2 to 3, wherein the first plasticization zone (368) is separated from the first mixing zone (372) by a second orifice (369) and the second plasticization zone is separated from the second mixing zone by a third orifice.

5. The method of any of claims 2 to 4, wherein the second mixing zone is separated from the second injection chamber by a fourth orifice.

6. The method of any of the preceding claims, further comprising placing a preformed component into the mold (292).

7. The method of any of the preceding claims, wherein at least one of the first injection chamber and the second injection chamber includes a plurality of injection chambers.

8. The method of any of the preceding claims, wherein a pressure gradient exists between the mold (292) and each of the first injection chamber and the second injection chamber, such that the mold (292) is a lower pressure than each of the first injection chamber and the second injection chamber.

9. The method of claim any of the preceding claims, wherein the first material forms a midsole of the sole structure (104) and the second material forms an outsole of the sole structure (104).

10. The method of any of the preceding claims, wherein the first blowing agent is at least one of nitrogen and carbon dioxide.

## Patentansprüche

1. Verfahren zur Herstellung einer Sohlenstruktur (104), wobei das Verfahren umfasst:
Schmelzen eines ersten Materials in einer ersten Plastifizierungszone (368) einer ersten Einspritzleitung;
Schmelzen eines zweiten Materials in einer zweiten Plastifizierungszone einer zweiten Einspritzleitung;
Einspritzen eines ersten Treibmittels in das erste Material innerhalb einer ersten Mischzone (372) der ersten Einspritzleitung, wobei das erste Treibmittel innerhalb der ersten Mischzone (372) ein überkritisches Fluid ist; und
Co-Injektion des ersten Materials und des zweiten Materials in eine Form (292), um die Sohlenstruktur (104) zu bilden, wobei das erste Material aus einer ersten Einspritzkammer (376) eingespritzt wird, die durch eine erste Öffnung (370) von der ersten Mischzone (372) getrennt ist, und das zweite Material aus einer zweiten Einspritzkammer eingespritzt wird, wobei das erste Treibmittel innerhalb der Form (292) nukleiert, um das erste Material innerhalb der Form (292) zu expandieren und aufzuschäumen.

2. Verfahren nach Anspruch 1, wobei ferner ein zweites Treibmittel in das zweite Material innerhalb einer zweiten Mischzone der zweiten Einspritzleitung eingespritzt wird.

3. Verfahren nach Anspruch 2, wobei das zweite Treibmittel innerhalb der Form (292) nukleiert, um das zweite Material innerhalb der Form zu expandieren und aufzuschäumen.

4. Verfahren nach einem der Ansprüche 2 bis 3, wobei die erste Plastifizierungszone (368) durch eine zweite Öffnung (369) von der ersten Mischzone (372) getrennt ist und die zweite Plastifizierungszone durch eine dritte Öffnung von der zweiten Mischzone getrennt ist.

5. Verfahren nach einem der Ansprüche 2 bis 4, wobei die zweite Mischzone durch eine vierte Öffnung von der zweiten Einspritzkammer getrennt ist.

6. Verfahren nach einem der vorstehenden Ansprüche, wobei ferner ein vorgeformtes Bauteil in die Form (292) eingesetzt wird.

7. Verfahren nach einem der vorstehenden Ansprüche, wobei zumindest eine der ersten Einspritzkammer und der zweiten Einspritzkammer mehrere Einspritzkammern umfasst.

8. Verfahren nach einem der vorstehenden Ansprüche, wobei zwischen der Form (292) und jeder der ersten Einspritzkammer und der zweiten Einspritzkammer ein Druckgefälle besteht, so dass in der Form (292) ein niedrigerer Druck herrscht als in jeder der ersten Einspritzkammer und der zweiten Einspritzkammer.

9. Verfahren nach einem der vorstehenden Ansprüche, wobei das erste Material eine Zwischensohle der Sohlenstruktur (104) bildet und das zweite Material eine Außensohle der Sohlenstruktur (104) bildet.

10. Verfahren nach einem der vorstehenden Ansprüche, wobei das erste Treibmittel mindestens eines von Stickstoff und Kohlendioxid ist.

## Revendications

1. Procédé de fabrication d'une structure de semelle (104), le procédé comprenant :
la fusion d'un premier matériau dans une première zone de plastification (368) d'une première ligne d'injection ;
la fusion d'un deuxième matériau dans une deuxième zone de plastification d'une deuxième ligne d'injection ;
l'injection d'un premier agent gonflant à l'intérieur du premier matériau dans une première zone de mélange (372) de la première ligne d'injection, le premier agent gonflant étant un fluide supercritique dans la première zone de mélange (372) ; et
la co-injection du premier matériau et du deuxième matériau à l'intérieur d'un moule (292) pour former la structure de semelle (104), le premier matériau étant injecté depuis une première chambre d'injection (376) qui est séparée de la première zone de mélange (372) par un premier orifice (370) et le deuxième matériau étant injecté depuis une deuxième chambre d'injection, le premier agent gonflant nucléant à l'intérieur du moule (292) pour expanser et faire mousser le premier matériau à l'intérieur du moule (292).

2. Procédé de la revendication 1, comprenant en outre l'injection d'un deuxième agent gonflant à l'intérieur du deuxième matériau dans une deuxième zone de mélange de la deuxième ligne d'injection.

3. Procédé de la revendication 2, dans lequel le deuxième agent gonflant nuclée à l'intérieur du moule (292) pour expanser et faire mousser le deuxième matériau à l'intérieur du moule.

4. Procédé de l'une quelconque des revendications 2 à 3, dans lequel la première zone de plastification (368) est séparée de la première zone de mélange (372) par un deuxième orifice (369) et la deuxième zone de plastification est séparée de la deuxième zone de mélange par un troisième orifice.

5. Procédé de l'une quelconque des revendications 2 à 4, dans lequel la deuxième zone de mélange est séparée de la deuxième chambre d'injection par un quatrième orifice.

6. Procédé de l'une quelconque des revendications précédentes, comprenant en outre la mise en place d'un composant préformé à l'intérieur du moule (292).

7. Procédé de l'une quelconque des revendications précédentes, dans lequel la première chambre d'injection et/ou la deuxième chambre d'injection comprennent une pluralité de chambres d'injection.

8. Procédé de l'une quelconque des revendications précédentes, dans lequel un gradient de pression existe entre le moule (292) et à la fois la première chambre d'injection et la deuxième chambre d'injection, de sorte que le moule (292) se trouve à une pression inférieure à celle à la fois de la première chambre d'injection et de la deuxième chambre d'injection.

9. Procédé de l'une quelconque des revendications précédentes, dans lequel le premier matériau forme une semelle intermédiaire de la structure de semelle (104) et le deuxième matériau forme une semelle extérieure de la structure de semelle (104).

10. Procédé de l'une quelconque des revendications précédentes, dans lequel le premier agent gonflant est l'azote et/ou le dioxyde de carbone.
